# EUROPEAN PATENT SPECIFICATION

(11) **EP 3 706 991 B1**
(45) Date of publication and mention of the grant of the patent: **15.02.2023**
(21) Application number: 18811940.8
(22) Date of filing: 06.11.2018
(51) Int. Cl.: B29D 30/32, B29D 30/24

(54) **BUILDING DRUM DRIVE UNIT**
AUFBAUTROMMELANTRIEBSEINHEIT
UNITÉ D'ENTRAÎNEMENT DE TAMBOUR DE CONSTRUCTION

(30) Priority: 07.11.2017 SK 500722017
(43) Date of publication of application: 16.09.2020
(73) Proprietor: Mesnac European Research And Technical Centre S.R.O, 914 01 Trencianska Teplá (SK)
(72) Inventor: BAKOS, Stefan, 020 01 Púchov (SK)
(74) Representative: Majlingová, Zuzana
(86) International application number: PCT/SK2018/050011
(87) International publication number: WO 2019/093975

(56) References cited:
- EP-A1- 2 217 433
- EP-A1- 2 464 508
- EP-A2- 1 439 054
- JP-A- 2013 056 445

## Description

### Technical field

The present invention relates to a device for winding components of a green tyre, shaping thereof, winding and assembling of the green tyre. On a turning shaft the device carries two symmetrically arranged parts for winding and fastening components, furthermore two symmetrically arranged parts comprising a system for winding components, which together form a building drum. The device enables the drum parts not only to rotate, but also to move symmetrically and synchronously axially along the turning shaft, independently on each other.

### Background art

Document EP 2 464 508 B1 describes one of possible ways to achieve independent symmetrical movements of parts of a similar drum and possibilities of rotating thereof Although the principle of moving through a system of traction and pressure rods (pull/push rods) enables to achieve independent synchronous and symmetrical movement of parts, the cited shortening of the shaft refers only to its length in a casing. Outside the casing the shaft length is determined by the design and functionality of the building drum. Said space is essentially unexploited, rods are very long and subject to relatively massive deformations considering the forces occurring at the tyre forming processes. In addition, the number of system components increases resulting in generation of other deformations, clearance, breakdown rate and price of the device. The necessary length thereof increases substantially by relocation of bolts into the casing. The bolts are positioned outside traction and pressure rod axes causing additional bending stress. Said has caused a need for use of bolt pairs and an increase in the price of the device. Another disadvantage is that deformations of rods of significantly different lengths are very difficult to compensate, and can affect the precision of the tyre beads position when assembled. Complexity and number of parts in such arrangement affect the price of the equipment, maintenance demands, and space.

EP 2217433 B1 describes the arrangement of non-coaxially mounted self-propelled bolts. In such unsymmetrical arrangement, several problems affecting reliability of such system occur. It is necessary to resolve the torque transmission beyond the rotation axis by a complicated epicyclic gearing. The non-coaxial arrangement results in rise of additional bending moments that do not occur in the coaxial configuration. These have a great influence on durability and breakdown rate of such system, on necessity to strengthen used bolts, and thus on increase in the shaft diameter and, ultimately, on the price of such system.

EP 1 439 054 also includes a coaxial arrangement, which, however, does not allow a direct independent drive of each bolt, the drive being addressed by switching pneumatic couplings requiring a certain switching time and also slowing or stopping the movement. Ultimately, it first and foremost results in time increase of the shaping process, as well as in decrease of the system reliability.

JP 2013 056445 A discloses a tire manufacturing apparatus that includes: a molding drum that includes a folding back means of the tire component member; a side part ring provided for both ends of the axial direction of molding drum respectively; an actuation means to operate an arm support member that pivotally mounts a folding arm; and an operation control means that imparts the motor driving force to either one of the actuation means that operates the side part ring or the arm support member and generates the relative displacement to the side part ring and the actuation means. The folding back arm folds back and presses the expanded tire component member at the periphery of the bead core to manufacture the unvulcanised tire.

In addition, many other solutions are known, wherein one or the other pair of the drum parts is driven pneumatically. However, it is rather problematic to maintain a synchronous symmetrical movement of the left side of the drum against the right side. Said is addressed by the author in the patent described in EP 2 293 927 B1 by a suitable pneumatic locking device, in which the parts have to stop for a moment and wait for their locking, after that the lever portion can be put into motion through a bolt. Said also has an influence on time increase when shaping the green tyre and winding the outer components of the tyre, and thus on overall productivity.

### Summary of the invention

The present invention relates to a drive system for driving a drum for green tyre manufacturing according to independent claim 1.

During shaping of a green tyre and winding outer components of the tyre, it is necessary that all movements of a drum and parts thereof run symmetrically along the vertical axis A1, i.e. the axis perpendicular to the rotation axis A2 of the drum for production of green tyres. Symmetric and precise movement is most easily achieved by a system provided with a bolt having a left and a right thread with corresponding nuts. As a result of the coaxial and symmetrical arrangement of such two bolt systems, the unfavourable additional bending loads do not occur. A suitable mechanical interconnection with the drum parts enables independent drive of the aforementioned bolt systems. As a result the number of parts required for the correct operation of the device is significantly reduced, the possibility of allowance between the components used decreases, reliability increases and maintenance simplifies.

The drum for manufacturing green tyres (hereinafter referred to as the drum) suitable for the drive system according to the invention should comprise a right and a left shaft part for winding outer components about bead wires, symmetrically arranged according to A1 axis and the right and the left outer parts serving to fasten bead wires and sealing the inner space of the green tyre, symmetrically arranged according to A1 axis. For the correct function of the drum said drum parts have to have the possibilities to move together and each independently, be it symmetrically according to A1 axis.

The drum and parts thereof (outer and lever ones) are not components of the drive system according to the invention. Said drive system is compatible with various drums of this type and can be changed depending on sizes of the manufactured green tyres. The drum can be withdrawn from the hollow shaft by pulling the connecting means - pivots of the lever part and pivots of the outer part of the drum connecting the respective drum parts with the drive system according to the present invention.

The drive system according to the present invention comprises a hollow shaft having two bolt systems arranged coaxially and in principle one after another inside the said shaft: the first bolt system and the second bolt system provided with two drivers.

According to another embodiment one or both drivers may be replaced by a system of traction and pressure rods (pull/push rods).

The first bolt system comprises a bolt with two thread parts - the first thread portion and the second thread portion that are both symmetrically arranged with respect to the A1 axis. The A1 axis is a vertical axis perpendicular to the rotation axis A2 of the drum and running through the centre of the drum dividing it to the right part and to the left part.

The thread portions of the first bolt system have mutually opposite running of the thread having identical sloping. One nut is arranged on each of the thread portions. A spring is firmly attached on each nut. The spring prevents rotation of the nut with respect to the hollow shaft.

The bolt of the first bolt system is supported on bearings and driven through the transmission by means of a separate drive. By rotating the bolt nuts move along the separate thread portions causing the axial movement of the springs. Due to opposite running of the threads of the thread portions, when rotating the bolt in one direction the springs approach each other and when rotating the bolt in opposite direction the springs move away from each other. Said axial movement of the springs is transmitted to the lever portion of the drum by means of the connecting elements. Individual nut springs control independently the left and the right lever portions of the drum by means of connecting elements. Thereby they secure movement of the drum lever system serving for winding the outer components of the green tyre around the bead wires.

The bolt of the first bolt system contains the above described thread portion and a non-thread portion, the second bolt system is placed on.

A hollow bolt of the second bolt system is positioned coaxially rotationally moveable on the non-thread portion of the bolt of the first bolt system so as to allow independent rotation of both systems about the A2 axis. Said hollow bolt also contains two parts having threads - thread portions. Said thread portions also enjoy mutually opposite running of the thread having identical sloping, like the previously described system, making it easier to control and synchronise mutual movements of both systems. One nut is arranged on each of the described thread portion. A spring is firmly attached on each nut. Said springs prevent rotation of the nuts with respect to the hollow shaft. The hollow bolt with nuts and springs forms the second bolt system.

The second bolt system is also supported on bearings and driven through the transmission by means of a separate drive.

A hollow cylindrical driver is firmly attached on each of the nuts of the second bolt system. A short hollow cylindrical driver is attached on one of the nuts and a long hollow cylindrical driver is attached on another nut. Both drivers are arranged axially towards A2 axis. Each driver contains a spring to prevent rotation of the driver with respect to the hollow shaft. Said spring is positioned on the opposite end of the driver as the nut.

The long hollow driver passes freely over the nuts of the first bolt system and is provided with grooves so as not to block movement of the springs of the first bolt system and with cut-outs so as not to block axial movement of the short hollow driver.

The short hollow driver passes freely over the second nut of the second bolt system and is provided with a groove to enable to attach the long hollow cylindrical driver onto the second nut of the second bolt systems and with a cut-out so as not to block axial movement of the long hollow driver.

Positioning of the springs on drivers and lengths of individual drivers are so that the springs are symmetrically arranged with respect to the vertical axis A1.

The individual springs of the drivers independently control (transmit the movement on) the left and right outer part of the drum by means of the connecting elements, as will be explained later. Thereby they provide movement of the outer part of the drum serving during forming of the tyre, in particular for fixing the bead wires and sealing the inner space of the tyre.

The second bolt system operates in a similar manner as the first bolt system. By rotation of the hollow bolt the individual nuts of the second bolt system moves along the thread portions causing axial movement of the drivers and thus the axial movement of the driver springs. Due to the opposite running of the threads of the thread portions, when rotating the hollow bolt in one direction the driver springs approach each other and when rotating the hollow bolt in opposite direction the driver springs move away from each other. Said axial movement of the springs is transmitted independently to the right and left outer portion of the drum by means of the connecting elements. Wherein the spring of the long driver controls the left outer part of the drum by means of one connecting element and the spring of the short driver controls the right outer part of the drum.

The system having the left and right running of the thread enjoys a great advantage in that the axial forces that can be formed due to such system, although they can be extremely substantiate, they nullify each other and do not overload the bearings.

The hollow shaft can be supported in the supporting frame on the bearings. The hollow shaft can be rotated through the transmission by means of a separate drive. The hollow shaft is provided with necessary cut-outs and grooves enabling connection of springs of the bolt systems via the connecting means, such as pivots, with the respective parts of the drum.

In case of winding components of a green tyre, the unchanged axial positions of outer and lever parts of the drum during rotation of the hollow shaft are secured by synchronisation of all three transmissions - the first bolt system transmission, the second bolt system transmission and the hollow shaft.

A belt pulley or gear wheels can be used as the transmission of the drive systems.

Drives or transmissions can be provided with a safety system for protection of the system against overload. Such safety systems can be in the form of safety clutches or shear pins.

The transmission system according to the present invention can be mounted on the supporting frame that can be firmly connected to the ground. Alternatively, the supporting frame can be arranged rotationally or displaceably with respect to the ground. The advantage of such arrangement is that deflection of the hollow shaft can be compensated.

In a preferred embodiment of the present invention one supporting frame may support a plurality of transmission systems.

Since most of the time during forming the inner part of the green tyre all parts of the drum (outer ones and lever ones) move together, it would be basically possible to drive also the outer parts of the drum by the first bolt system. However, after completion of forming the inner semi-products of the tyre, only the lever portions of the drum keep moving in order to wind the outer components of the tyre around the bead wires. Accordingly, the lever portions of the drum need a larger stroke. For that reason as well as for sake of space saving it is advantageous to position the axial transmission of the lever portions, i.e. the first bolt system into a relatively long part of the hollow shaft symmetrically about the A1 axis. On the other hand, the outer parts of the drum suffice with a smaller stroke and therefore the hollow bolt of the second bolt system can be shorter, i.e. the second bolt system occupies a shorter part of the hollow shaft.

### Brief description of the drawings

Figure 1 illustrates configuration of a driving system and a drum for green tyre manufacturing in the initial stage.
Figure 2 1 illustrates configuration of a driving system and a drum for green tyre manufacturing in the stage, when winding of outer tyre semi-products begins.
Figure 3 illustrates configuration of a driving system and a drum for green tyre manufacturing in the stage when winding of outer tyre components is being completed.
Figures 4a and 4b illustrate mutual configuration of the first and the second bolt systems.
Figures 5a and 5b illustrate two extreme positions of the bolt system and driver mechanisms.

### Detailed description

### Example 1:

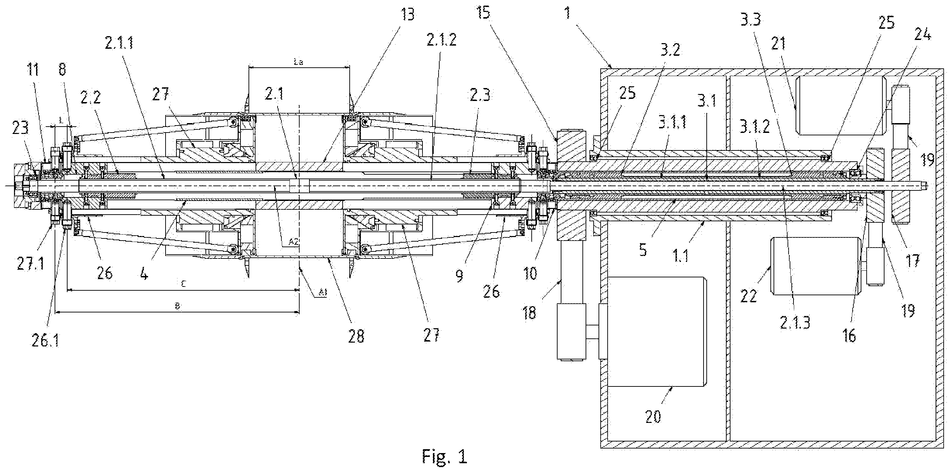

Fig. 1 illustrates a driving system according to the invention with a drum for green tyre manufacturing. Said driving system contains hollow shaft 13, the first bolt system is coaxially arranged inside shaft 13, the second bolt system with drivers is coaxially arranged on the first one.

The first bolt system comprises bolt 2.1 with two thread portions 2.1.1 and 2.1.2, symmetrically arranged with respect to A1 axis. Thread portions 2.1.1 and 2.1.2 have mutually opposite running of the thread having identical sloping. One nut 2.2 and 2.3 is arranged on each of the thread portions 2.1.1 and 2.1.2 je. Springs 8 and 9 are firmly attached on nuts 2.2 and 2.3. Springs 8 and 9 prevent rotation of nuts 2.2 a 2.3 with respect to hollow shaft 13.

The first bolt system is supported on bearing 23 positioned on the left end of shaft 13 and driven through transmission 17 by drive 21. Transmission 17 consists of a pulley firmly attached on bolt 2.1 and connected by belt 19 with drive 21.

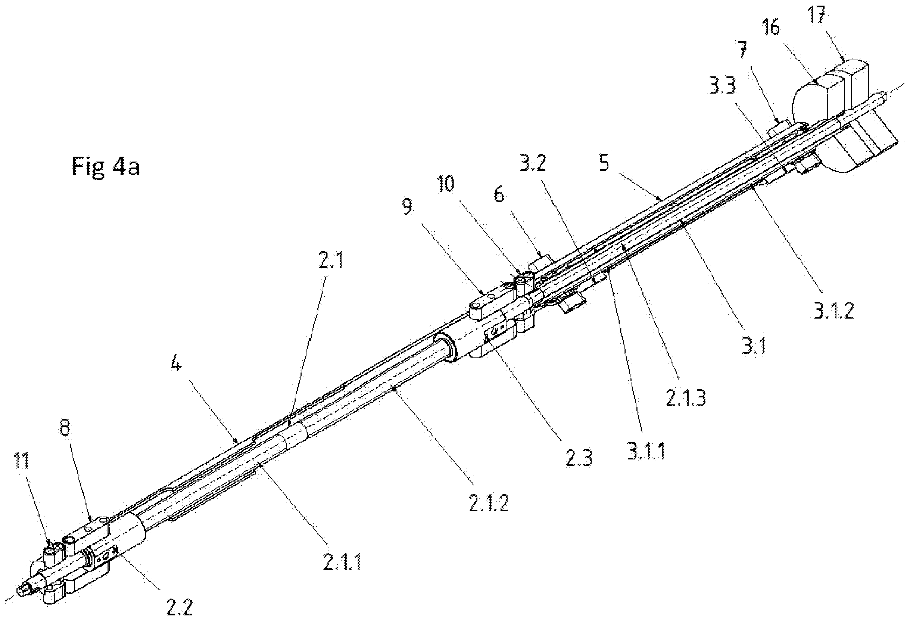

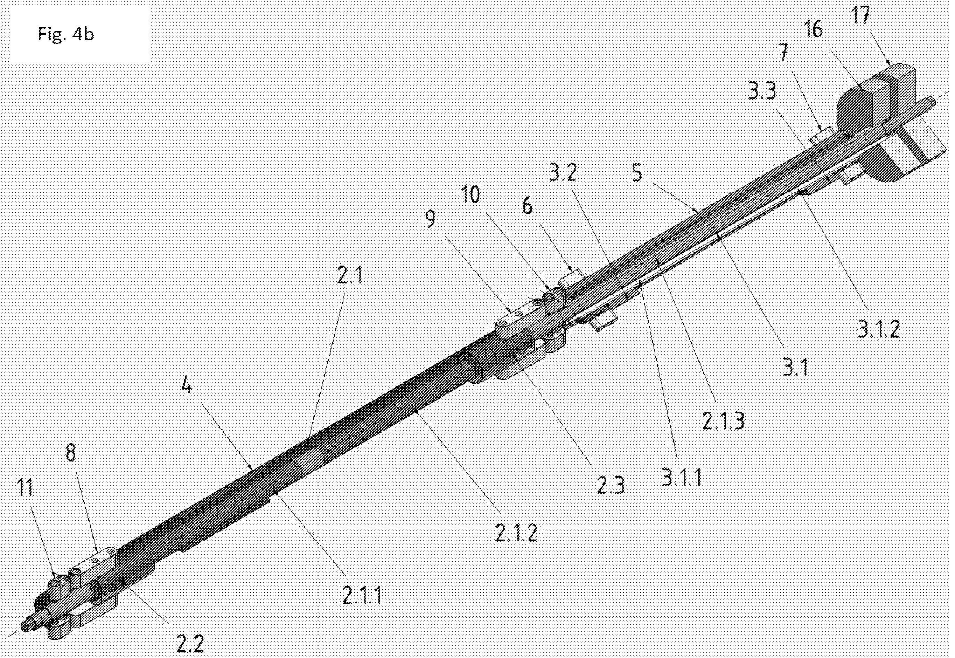

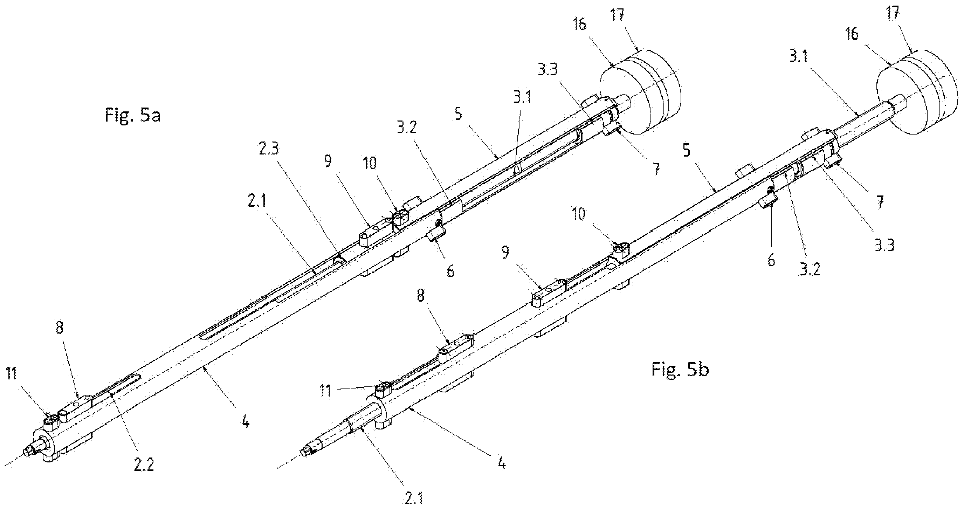

Hollow bolt 3.1 of the second bolt system is coaxially positioned on bolt 2.1 in the area of non-thread portion 2.1.3. Hollow bolt 3.1 is loosely slipped on bolt 2.1 so as to allow independent rotation of both bolts 3.1 and 2.1 about A2 axis. Hollow bolt 3.1 is provided with two thread portions - right thread portion 3.1.1 and left thread portion 3.1.2. Individual thread portions 3.1.1 and 3.1.2 have mutually opposite running of the thread. One nut 3.2 and 3.3 is arranged on each of thread portions 3.1.1 and 3.1.2. Springs 6 and 7 are firmly attached on nuts 3.2 and 3.3. Springs 6 and 7 prevent rotation of nuts 3.2 and 3.3 with respect to hollow shaft 13. Hollow bolt 3.1 with nuts 3.2 and 3.3 and springs 6 and 7 form the second bolt system. See Figs. 4a, 4b, 5a and 5b.

The second bolt system is supported on bearing 24 positioned on the first end of shaft 13 and driven through transmission 16 by means of drive 22.

The long hollow cylindrical driver 4 is firmly attached on nut 3.2. Spring 11 is firmly attached on said driver 4. Spring 11 of driver 4 axially displaces left part of drum 27 through connecting means 27.1 in the form of a pivot.

Driver 4 passes freely over nuts 2.2 and 2.3 and is provided with grooves so as not to block movement of springs 8 and 9 and with a cut-out so as not to block axial movement of the short hollow cylindrical driver 5.

The short hollow cylindrical driver 5 is firmly attached on nut 3.3. Spring 10 is firmly attached on said driver 5. Spring 10 of driver 5 drives the right part of the outer portion of drum 27 through connecting means 27.1 in the form of a pivot.

Driver 5 passes freely over nut 3.2 and is provided with a groove so as to enable attaching the long hollow cylindrical driver 4 on nut 3.2 and with a cut-out, so as not to block axial movement of driver 4.

Positioning of springs 10 and 11 on drivers 5 and 4 and lengths of individual drivers 5 and 4 are such that springs 10 and 11 are symmetrically arranged with respect to A1 axis.

Figures 5a and 5b illustrate a possible embodiment of drivers 4 and 5 with springs 10 and 11 with cut-outs and grooves required for the correct operation of the first and the second bolt system.

By turning bolt 2.1 through transmission 17 by drive 21 nuts 2.2 and 2.3 move along thread portions 2.1.1 and 2.1.2 causing axial movement of springs 8 and 9. Due to opposite running of threads of thread portions 2.1.1 and 2.1.2 springs 8 and 9 approach each other when rotating bolt 2.1 in one direction and when rotating bolt 2.1 in opposite direction, springs 8 and 9 move away from each other. Said axial movement of springs 8 and 9 is transmitted onto lever portion 26 of the drum through connecting means 26.1 in the form of a pivot. Spring 8 of nut 2.2 controls left lever portion 26 of the drum through the pivot, and spring 9 of nut 2.3 controls right lever portion 26 of the drum.

The second bolt system operates in the similar manner as the first bolt system. By turning bolt 3.1 through transmission 16 by drive 22 nuts 3.2 and 3.3 move along the thread portions 3.1.1 and 3.1.2 causing axial movement of drivers 4 and 5 and thus axial movement of springs 10 and 11. Due to opposite running of threads of thread portions 3.1.1 and 3.1.2 springs 10 and 11 approach each other when rotating bolt 3.1 in one direction and when rotating bolt 3.1 in the opposite direction, springs 10 and 11 move away from each other. Said axial movement of springs 10 and 11 is transmitted to outer part 27 of the drum through connecting means 27.1 in the form of a pivot. Spring 11 of driver 4 controls left outer part 27 of the drum through the pivot, and spring 10 of driver 5 controls right outer part 27 of the drum through the pivot.

Hollow shaft 13 is supported in supporting frame 1 on bearing bush 1.1 on bearings 25. Hollow shaft 13 is firmly connected with transmission 15 in the form of a pulley and belt 18. Hollow shaft can be rotated about A2 axis through transmission 15 by means of drive 20. In case of winding components of a green tyre unchanged axial positions of outer and lever portions of the drum during rotation of hollow shaft 13 are provided by synchronization of drives 20, 21 and 22.

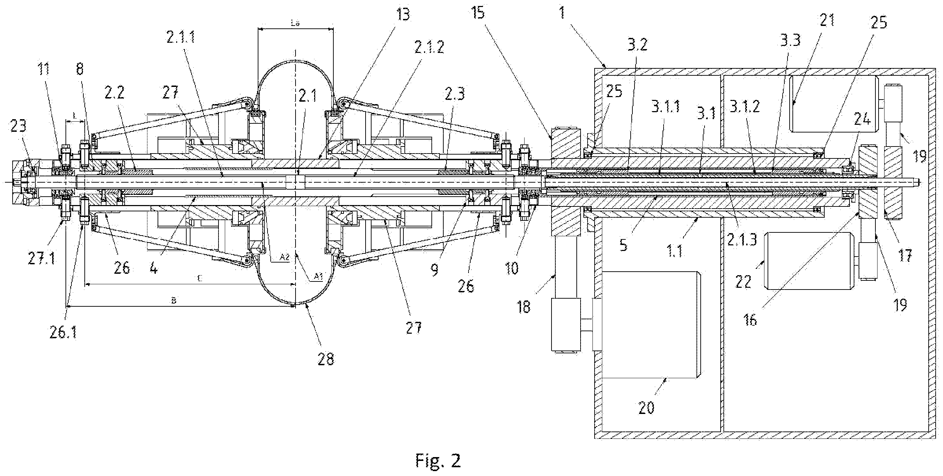

Figure 2 illustrates schematically a driving system with a drum for green tyre manufacturing in the stage, when winding of outer tyre components begins. Thus, the stage when after previous simultaneous movement of drives 22 and 21 drive 22 stops and only drive 21 continues causing increase in length "L", while length "La" stops shortening.

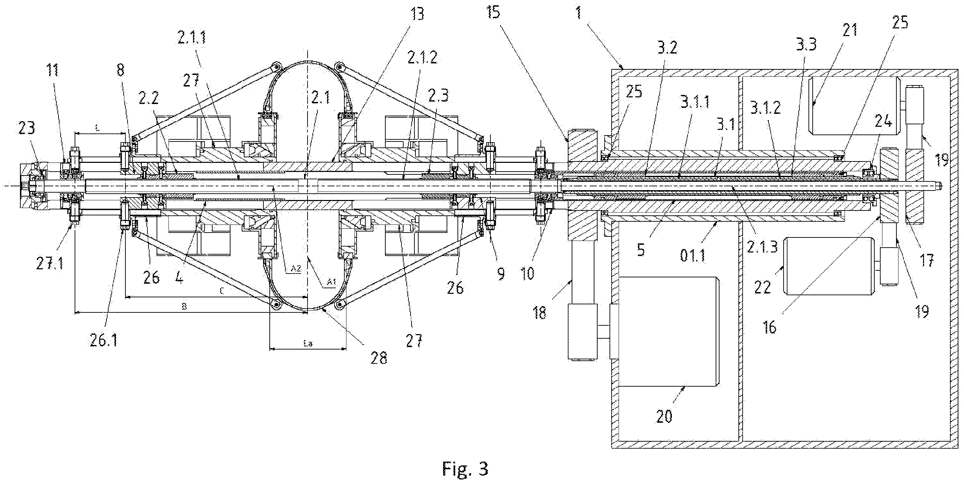

Figure 3 illustrates schematically a driving system with a drum for green tyre manufacturing in the stage when winding of outer tyre semi-products is being completed, thus, the stage when length "L" reaches its maximum.

Figures 4a and 4b are schematic views in detail of the first and the second bolt system with partially removed drivers 4 and 5, for better understanding of the embodiment.

Figures 5a and 5b enlighten in details functionality and equipment of axial drive inside hollow shaft 13. Two extreme positions of the bolts systems can be compared on Figures 5a and 5b. Drivers 8, 9, 10 and 11 in the most distant position from the centre (of A1 axis) can be seen in the left part of the figure and in the closest position to the centre (of A1 axis) in the right part. There is a diametric difference in spread (stroke) of springs 8 a 9 when compared with springs 10 and 11. One of the possible embodiments of driver 4 with required cut-outs for the correct function of the first bolt system, a shape of driver 5 and springs 6 and 7, securing nuts 3.2 and 3.3 against overturning with respect to shaft 13 is on the figure.

### Industrial utilization

Method according to the present invention can be utilized in rubber industry, in particularly for radial tyre manufacturing.

List of reference numbers:
1 - Supporting frame
1.1 - Supporting frame bearing bush
2.1 - Bolt of the first bolt system
2.1.1 - First thread portion of a bolt
2.1.2 - Second thread portion of a bolt
2.1.3 - Threadless portion of a bolt
2.2 - Nut of the bolt first thread portion
2.3 - Nut of the bolt second thread portion
3.1 - Hollow bolt of the second bolt system
31.1 - First thread portion of a hollow bolt
3.1.2 - First thread portion of a hollow bolt
3.2 - Nut of the hollow bolt first thread portion
3.3 - Nut of the hollow bolt second thread portion
4 - Long hollow cylindrical driver
5 - Short hollow cylindrical driver
6 - Nut spring of the hollow bolt first thread portion
7 - Nut spring of the hollow bolt second thread portion
8 Nut spring of the bolt first thread portion
9 - Nut spring of the bolt second thread portion
10 - Short driver spring
11 - Long driver spring
13 - Hollow shaft
15 - Hollow shaft transmission
16 - Second bolt system transmission
17 - First bolt system transmission
18 - Hollow shaft transmission belt
19 - Transmission belts of bolt systems
20 Hollow shaft drive
21 - First bolt system drive
22 - Second bolt system drive
23 - Bearing of the first bolt system
24 - Bearing of the second bolt system
25 - Hollow shaft bearing
26 - Drum lever portions - right and left
26.1 - Connecting element of the drum lever portion
27 - Outer parts of the drum - right and left
27.1 - Connecting element of the outer part of the drum

## Claims

1. Drive system for driving a drum for green tyre manufacturing comprising a right and a left lever portion (26) for winding outer components (28) around bead wires, symmetrically arranged according to A1 axis and a right and a left outer part (27) for fastening bead wires and sealing the inner space of a tyre, symmetrically arranged according to A1 axis, wherein the drive system comprises:
- a hollow shaft (13),
- a first bolt system coaxially arranged inside the hollow shaft (13) comprising:
- a bolt (2.1) provided with a first thread portion (2.1.1) and with a second thread portion (2.1.2), symmetrically arranged according to A1 axis, where the fist thread portion (2.1.1) and the second thread portion (2.1.2) have mutually opposite thread running, where the bolt (2.1) further comprises a non-thread portion (2.1.3),
- a nut (2.2) arranged on the first thread portion (2.1.1) of the bolt (2.1),
- a nut (2.3) arranged on the second thread portion (2.1.2) of the bolt (2.1),
- a spring (8) firmly attached on the nut (2.2) of the bolt first thread portion in order to prevent rotation of the nut (2.2) with respect to the hollow shaft (13),
- a spring (9) firmly attached on the nut (2.3) of the bolt second thread portion in order to prevent rotation of the nut (2.3) with respect to the hollow shaft (13),
- a second bolt system coaxially arranged inside the hollow shaft (13) comprising:
- a hollow bolt (3.1) positioned coaxially rotationally moveable on the non-thread portion (2.1.3) of the bolt (2.1), where the hollow bolt (3.1) is provided with a first thread portion (3.1.1) and with a second thread portion (3.1.2), where individual thread portions (3.1.1) and (3.1.2) have mutually opposite thread running,
- a nut (3.2) arranged on the first thread portion (3.1.1) of the hollow bolt (3.1),
- a nut (3.3) arranged on the second thread portion (3.1.2) of the hollow bolt (3.1),
- a spring (6) firmly attached on the nut (3.2) of the hollow bolt first thread portion in order to prevent rotation of the nut (3.2) with respect to the hollow shaft (13),
- a spring (7) firmly attached on the nut (3.3) of the hollow bolt second thread portion in order to prevent rotation of the nut (3.3) with respect to the hollow shaft (13),
- a long cylindrical hollow driver (4) firmly attached on the nut (2.3) of the bolt second thread portion, arranged axially with respect to A2 axis, where the driver (4) passes freely over the nuts (2.2,2.3) of the bolt first and second thread portion and is provided with grooves enabling movement of springs (8) and (9),
- a spring (11) firmly attached on the long cylindrical hollow driver (4),
- a short cylindrical hollow driver (5), firmly attached on the nut (3.3) of the hollow bolt second thread portion, arranged axially with respect to A2 axis, where the driver (5) passes freely over the nut (3.2) of the hollow bolt first thread portion and is provided with a groove enabling connection of the nut (3.2) of the hollow bolt first thread portion with the long cylindrical hollow driver (4),
- a spring (10) firmly attached on the short cylindrical hollow driver (5), where
- the long and the short cylindrical hollow drivers (4) and (5) are further provided with cut-outs in order to enable mutual axial movement of both drivers (4) and (5), where
- springs (10) and (11) are symmetrically arranged according to A1 axis,
- the bolt (2.1), the hollow bolt (3.1) and the hollow shaft (13), are each individually through respective transmissions (17, 16, 15) connected to drives (21,22,20), where
- the drives (21,22,20) are adapted for mutual synchronous cooperation so that they enable mutual symmetrical movement of the right and the left lever portion (26) of the drum and the right and the left outer part (27) of the drum, where
- axial movement of the springs (8) and (9) along the A2 axis is transmitted by means of connecting elements (26.1) of the drum onto the right and the left lever portion (26) of the drum, each independently, and axial movement of the springs (10) and (11) along the A2 axis is transmitted by means of the connecting elements (27.1), onto the right and left outer part (27) of the drum, each independently.

2. Drive system according to Claim 1, **characterized in that**, the connecting element (26.1, 27.1) is a pivot.

3. Drive system according to Claim 1, **characterized in that**, one of both hollow drivers (4, 5) are replaced by a system of traction or pressure rods.

4. Drive system according to Claim 1, 2 or 3, **characterized in that,** transmissions (17, 16, 15), or drives (21,22,20) are provided with a safety system consisting of safety clutches, shear pins, for protection of the system against overload.

5. Drive system according to Claim 1, **characterized in that,** the transmission (17, 16, 15) is a belt pulley or a gear wheel.

6. Drive system according to any of preceding claims, **characterized in that,** it is supported on a supporting frame (1)

7. Drive system according to Claim 6, **characterized in that,** the supporting frame (1) carries a plurality of drive systems according to Claim 1.

8. Drive system according to Claim 6 or 7, **characterized in that,** the supporting frame (1) is firmly connected to the ground.

9. Drive system according to Claim 6 or 7, **characterized in that,** the supporting frame (1) is arranged rotably or displaceably with respect to the ground.

## Patentansprüche

1. Antriebssystem zum Antreiben einer Trommel für die Rohreifenherstellung mit einem rechten und einem linken Hebelabschnitt (26) zum Wickeln von Außenkomponenten (28) um Wulstdrähte, symmetrisch angeordnet gemäß einer Achse A1 und einem rechten und einem linken Außenteil (27) zum Befestigen von Wulstdrähten und zum Abdichten des Reifeninnenraums, symmetrisch zur Achse A1 angeordnet, wobei das Antriebssystem umfasst:
- eine Hohlwelle (13),
- ein erstes Schraubensystem, das koaxial innerhalb der Hohlwelle (13) angeordnet ist, umfassend:
- eine Schraube (2.1), die mit einem ersten Gewindeabschnitt (2.1.1) und mit einem zweiten Gewindeabschnitt (2.1.2), versehen ist, symmetrisch angeordnet zur Achse A1, wobei der erste Gewindeabschnitt (2.1.1) und der zweite Gewindeabschnitt (2.1.2) einen gegenläufigen Gewindeverlauf aufweisen, wobei die Schraube (2.1) ferner einen gewindelosen Abschnitt (2.1.3) aufweist,
- eine auf dem ersten Gewindeabschnitt (2.1.1) der Schraube (2.1) angeordnete Mutter (2.2),
- eine auf dem zweiten Gewindeabschnitt (2.1.2) der Schraube (2.1) angeordnete Mutter (2.3),
- eine Feder (8), die fest an der Mutter (2.2) des ersten Gewindeabschnitts der Schraube befestigt ist, um eine Drehung der Mutter (2.2) in Bezug auf die Hohlwelle (13) zu verhindern,
- eine Feder (9), die fest an der Mutter (2.3) des zweiten Gewindeabschnitts der Schraube befestigt ist, um eine Drehung der Mutter (2.3) in Bezug auf die Hohlwelle (13) zu verhindern,
- ein zweites Schraubensystem, das koaxial innerhalb der Hohlwelle (13) angeordnet ist, umfassend:
- eine Hohlschraube (3.1), die koaxial drehbeweglich auf dem gewindelosen Abschnitt (2.1.3) der Schraube (2.1) positioniert ist, wobei die Hohlschraube (3.1) mit einem ersten Gewindeabschnitt (3.1.1) und mit einem zweiten Gewindeabschnitt (3.1.2) versehen ist, wobei einzelne Gewindeabschnitte (3.1.1) und (3.1.2) einen gegenläufigen Gewindeverlauf aufweisen,
- eine auf dem ersten Gewindeabschnitt (3.1.1) der Hohlschraube (3.1) angeordnete Mutter (3.2),
- eine auf dem zweiten Gewindeabschnitt (3.1.2) der Hohlschraube (3.1) angeordnete Mutter (3.3),
- eine Feder (6), die fest an der Mutter (3.2) des ersten Gewindeabschnitts der Hohlschraube befestigt ist, um eine Drehung der Mutter (3.2) in Bezug auf die Hohlwelle (13) zu verhindern,
- eine Feder (7), die fest an der Mutter (3.3) des zweiten Gewindeabschnitts der Hohlschraube befestigt ist, um eine Drehung der Mutter (3.3) in Bezug auf die Hohlwelle (13) zu verhindern,
- einen langen zylindrischen hohlen Mitnehmer (4), die fest an der Mutter (2.3) des zweiten Gewindeabschnitts der Schraube befestigt ist, axial in Bezug auf die Achse A2 angeordnet, wobei der Mitnehmer (4) frei über die Muttern (2.2,2.3) des ersten und zweiten Gewindeabschnitts der Schraube läuft und mit Rillen versehen ist, die eine Bewegung der Federn (8) und (9) ermöglichen,
- eine Feder (11), die fest an dem langen zylindrischen Hohlmitnehmer (4) befestigt ist,
- einen kurzen zylindrischen Hohlmitnehmer (5), der fest an der Mutter (3.3) des zweiten Gewindeabschnitts der Hohlschraube befestigt ist, axial in Bezug auf die Achse A2 angeordnet, wobei der Mitnehmer (5) frei über die Mutter (3.2) des ersten Gewindeabschnitts der Hohlschraube läuft und mit einer Rille versehen ist, die eine Verbindung der Mutter (3.2) des ersten Gewindeabschnitts der Hohlschraube mit dem langen zylindrischen hohlen Mitnehmer (4) ermöglicht,
- eine Feder (10), die fest am kurzen zylindrischen Hohlmitnehmer (5) befestigt ist, wobei
- der lange und der kurze zylindrische Hohlmitnehmer (4) und (5) ferner mit Ausschnitten versehen sind, um eine gegenseitige axiale Bewegung beider Mitnehmer (4) und (5) zu ermöglichen, wobei
- Federn (10) und (11) symmetrisch zur Achse A1 angeordnet sind,
- die Schraube (2.1), die Hohlschraube (3.1) und die Hohlwelle (13) jeweils einzeln über entsprechende Getriebe (17, 16, 15) mit Antrieben (21, 22, 20) verbunden sind, wobei
- die Antriebe (21, 22, 20) für ein gegenseitiges synchrones Zusammenwirken ausgelegt sind, so dass sie eine gegenseitige symmetrische Bewegung des rechten und des linken Hebelabschnitts (26) der Trommel und des rechten und des linken Außenteils (27) der Trommel ermöglichen, wobei
- die axiale Bewegung der Federn (8) und (9) entlang der Achse A2 mittels Verbindungselementen (26.1) der Trommel auf den rechten und linken Hebelabschnitt (26) der Trommel übertragen wird, jeweils unabhängig, und die axiale Bewegung der Federn (10) und (11) entlang der Achse A2 mittels Verbindungselementen (27.1) auf den rechten und linken Außenteil (27) der Trommel übertragen wird, jeweils unabhängig.

2. Antriebssystem nach Anspruch 1, **dadurch gekennzeichnet , dass** das Verbindungselement (26.1, 27.1) ein Drehpunkt ist.

3. Antriebssystem nach Anspruch 1, **dadurch gekennzeichnet, dass** einer der beiden Hohlmitnehmer (4, 5) durch ein System aus Zug- oder Druckstangen ersetzt ist.

4. Antriebssystem nach Anspruch 1, 2 oder 3, **dadurch gekennzeichnet, dass** Getriebe (17, 16, 15), oder Antriebe (21, 22, 20) mit einem Sicherheitssystem versehen sind, das aus Sicherheitskupplungen, Scherstiften, zum Schutz des Systems vor Überlastung versehen sind.

5. Antriebssystem nach Anspruch 1, **dadurch gekennzeichnet, dass** das Getriebe (17, 16, 15) eine Riemenscheibe oder ein Zahnrad ist.

6. Antriebssystem nach einem der vorhergehenden Ansprüche, **dadurch gekennzeichnet, dass** es auf einem Stützrahmen (1) gelagert ist.

7. Antriebssystem nach Anspruch 6, **dadurch gekennzeichnet , dass** der Stützrahmen (1) mehrere Antriebssysteme nach Anspruch 1 trägt.

8. Antriebssystem nach Anspruch 6 oder 7, **dadurch gekennzeichnet, dass** der Stützrahmen (1) fest mit dem Boden verbunden ist.

9. Antriebssystem nach Anspruch 6 oder 7, **dadurch gekennzeichnet, dass** der Stützrahmen (1) in Bezug auf den Boden drehbar oder verschiebbar angeordnet ist.

## Revendications

1. Système de transmission pour diriger un tambour pour la construction d'un pneu vert, y compris une portion levier à droite et à gauche (26) pour enrouler les composants extérieurs (28) autour des tringles, symétriquement arrangé selon l'axe A1, et un composant extérieur à droite et à gauche (27) pour lier les tringles et pour fermer l'espace intérieur du pneu, symétriquement arrangé selon l'axe A1, où le système de transmission comprend :
- un arbre creux (13),
- un premier système vis-écrou coaxialement arrangé à l'intérieur de l'arbre creux (13) comprenant :
- un boulon (2.1) pourvu d'une première portion filetée (2.1.1) et d'une deuxième portion filetée (2.1.2), symétriquement arrangé selon l'axe A1, où la première portion filetée (2.1.1) et la deuxième portion filetée (2.1.2) ont un fil conducteur réciproquement opposé, où le boulon (2.1) comprend également une portion non-filetée (2.1.3),
- un écrou (2.2) positionné sur la première portion filetée (2.1.1) du boulon (2.1),
- un écrou (2.3) positionné sur la deuxième portion filetée (2.1.2) du boulon (2.1),
- un ressort (8) solidement attaché à l'écrou (2.2) de la première portion filetée du boulon, afin d'éviter la rotation de l'écrou (2.2) par rapport à l'arbre creux (13),
- un ressort (9) solidement attaché à l'écrou (2.3) de la deuxième portion filetée du boulon, afin d'éviter la rotation de l'écrou (2.3) par rapport à l'arbre creux (13),
- un deuxième système vis-écrou coaxialement arrangé à l'intérieur de l'arbre creux (13) comprenant :
- un boulon creux (3.1) positionné coaxialement et rotativement déplaçable sur la portion non filetée (2.1.3) du boulon (2.1), où le boulon creux (3.1) est pourvu d'une première portion filetée (3.1.1) et d'une deuxième portion filetée (3.1.2), où les portions filetée individuelles (3.1.1) et (3.1.2) ont un fil conducteur réciproquement opposé,
- un écrou (3.2) positionné sur la première portion filetée (3.1.1) du boulon creux (3.1),
- un écrou (3.3) positionné sur la deuxième portion filetée (3.1.2) du boulon (3.1),
- un ressort (6) solidement attaché à l'écrou (3.2) de la première portion filetée du boulon creux, afin d'éviter la rotation de l'écrou (3.2) par rapport à l'arbre creux (13),
- un ressort (7) solidement attaché à l'écrou (3.3) de la deuxième portion filetée du boulon creux, afin d'éviter la rotation de l'écrou (3.3) par rapport à l'arbre creux (13),
- un organe d'entraînement cylindrique long (4) solidement attaché à l'écrou (2.3) de la deuxième portion filetée du boulon, arrangé axialement par rapport à l'axe A2, où l'organe d'entraînement (4) passe librement au-dessus des écrous (2.2, 2.3) de la première et de la deuxième portion filetée du boulon et il est pourvu d'encoches permettant le mouvement des ressorts (8) et (9),
- un ressort (11) solidement attaché à l'organe d'entraînement cylindrique long (4),
- un organe d'entraînement cylindrique court (5) solidement attaché à l'écrou (3.3) de la deuxième portion filetée du boulon creux, arrangé axialement par rapport à l'axe A2, où l'organe d'entraînement (5) passe librement au-dessus de l'écrou (3.2) de la première portion filetée du boulon creux et il est pourvu d'encoches permettant la connexion de l'écrou (3.2) de la première portion filetée du boulon creux avec l'organe d'entraînement cylindrique long (4),
- un ressort (10) solidement attaché à l'organe d'entraînement cylindrique court (5), où
- les organes d'entraînement cylindriques long et court (4) et (5) sont pourvus d'entailles afin de permettre le mouvement axial réciproque des deux organes d'entraînement (4) et (5), où
- les ressorts (10) et (11) sont symétriquement arrangé selon l'axe A1,
- le boulon (2.1), le boulon creux (3.1) et l'arbre (13) sont chacun individuellement liés aux éléments d'actionnement (21, 22, 20) à travers leurs transmissions (17, 16, 15), où
- les éléments d'actionnement (21, 22, 20) sont adaptés pour leur coopération synchrone réciproque, de sorte qu'ils permettent le mouvement symétrique réciproque de la portion levier (26) droite et gauche du tambour et de la partie extérieure (27) droite et gauche du tambour, où
- le mouvement axial des ressorts (8) et (9) le long de l'axe A2 est transmis à l'aide d'éléments de connexion (26.1) du tambour sur la portion levier (26) droite et gauche du tambour, chacun indépendamment, et le mouvement axial des ressorts (10) et (11) le long de l'axe A2 est transmis à l'aide d'éléments de connexion (27.1) sur la partie extérieure (27) droite et gauche du tambour, chacun indépendamment.

2. Système de transmission selon la Revendication 1, **caractérisé en ce que** l'élément de connexion (26.1, 27.1) est un pivot.

3. Système de transmission selon la Revendication 1, **caractérisé en ce que** un des deux organes (4, 5) d'entraînement creux est remplacé par un système de traction ou tige de pression.

4. Système de transmission selon la Revendication 1, 2 ou 3, **caraetérisé en ce que** le transmissions (17, 16, 15) ou les éléments d'actionnement (21, 22, 20) sont pourvus d'un système de sécurité consistant en embrayages de sécurité, goupilles de cisaillement pour protéger le système contre la surcharge.

5. Système de transmission selon la Revendication 1, **caractérisé en ce que** la transmission (17, 16, 15) est une poulie ou une roue dentée.

6. Système de transmission selon n'importe laquelle de Revendications précédentes, **caractérisé en ce qu**'il est soutenu sur un cadre de support (1).

7. Système de transmission selon la Revendication 6, **caractérisé en ce que** le cadre de support (1) retient plusieurs systèmes de transmission selon la Revendication 1.

8. Système de transmission selon la Revendication 6 ou 7, **caraetérisé en ce que** le cadre de support (1) est solidement connecté au sol.

9. Système de transmission selon la Revendication 6 ou 7, **caraetérisé en ce que** le cadre de support (1) est arrangé de façon rotative ou mobile par rapport au sol.
